# EUROPÄISCHE PATENTSCHRIFT

(11) **EP 1 389 254 B1**
(45) Veröffentlichungstag und Bekanntmachung des Hinweises auf die Patenterteilung: **11.01.2006**
(21) Anmeldenummer: 02729896.7
(22) Anmeldetag: 21.05.2002
(51) Int. Cl.: E05B 65/12, E05B 47/00

(54) **ANTRIEBSEINRICHTUNG**
DRIVE DEVICE
DISPOSITIF DE COMMANDE

(30) Priorität: 23.05.2001 DE 10125093
(43) Veröffentlichungstag der Anmeldung: 18.02.2004
(73) Patentinhaber: SIEMENS AKTIENGESELLSCHAFT, 80333 München (DE)
(72) Erfinder: WEIS, Christian, 55120 Mainz (DE)
(86) Internationale Anmeldenummer: PCT/DE2002/001821
(87) Internationale Veröffentlichungsnummer: WO 2002/095171

(56) Entgegenhaltungen:
- EP-A- 0 320 008
- EP-A- 0 684 356
- DE-C- 19 727 422

## Beschreibung

Die Erfindung bezieht sich auf eine Antriebseinrichtung mit einem Stellantrieb zum Antreiben eines beweglichen Elements, insbesondere einer Schließeinrichtung einer Kraftfahrzeugtür, mittels eines Zahnrads, das einen Zahnkranz und eine Nabe aufweist, wobei der Zahnkranz mittelbar oder unmittelbar von dem Stellantrieb antreibbar ist und das bewegliche Element mittelbar oder unmittelbar von der Nabe des Zahnkranzes beaufschlagbar ist.

Schließeinrichtungen von Kraftfahrzeugtüren werden üblicherweise mechanisch oder elektrisch angetrieben. Elektrisch angetriebene Schließeinrichtungen werden insbesondere dann eingesetzt, wenn ein besonders schneller Öffnungs- und/oder Schließvorgang der Kraftfahrzeugtür gefordert ist. Für einen besonders schnellen Öffnungs- und/oder Schließvorgang einer Kraftfahrzeugtür ist ein besonders starker Motor erforderlich, der in besonders kurzer Zeit auf besonders hohe Umdrehungen hochläuft. Da der Öffnungs- und/oder Schließvorgang jedoch nur eine besonders kurze Zeit in Anspruch nimmt, wird der die Schließeinrichtung antreibende Stellantrieb unmittelbar nach dem Hochfahren meist schon wieder abgestellt, also herunter gefahren. Auch bei einer sofortigen Abschaltung des die Schließeinrichtung ansteuernden Stellantriebs kann sich durch die Schwungenergie des Motors eine erhebliche Drehmomentspitze auf einige Elemente, die der Motor antreibt, ergeben. Diese Belastung kann Komponenten des Antriebsstranges schädigen und im Extremfall sogar zerstören. Da jedoch der Platzbedarf für eine elektronisch angetriebene Schließeinrichtung eines Kraftfahrzeugs in einer Kraftfahrzeugtür äußerst gering ist fehlt üblicherweise die Möglichkeit, beim Abstellen des die Schließeinrichtung antreibenden Stellantriebs die Schwungenergie über einen besonders langen Weg abzufangen.

Aus der EP-A-0 684 356 ist eine Antriebseinrichtung der eingangs genannten Art bekannt. Dabei weist der Zahnkranz eine Ausnehmung auf, in die zentrisch ein Nabenabschnitt hineinragt. In die Ausnehmung ist ein elastisches Element derart eingesetzt, dass es mit einer entsprechen Öffnung auf den Nabenabschnitt aufgesteckt und durch eine Eingriffsfläche des Zahnkranzes in Position gehalten wird. Ein Nocken mit einem Scheibenelement ist derart in die Ausnehmung des Zahnkranzes einsetzbar, dass ein an dem Scheibenelement angeordneter Stangenvorsprung in einen zum Nabenabschnitt parallelen Ausschnitt des elastischen Zwischenelements eingreift.

Aus der EP-A-0 320 008 ist eine Antriebseinrichtung eines elektromotorisch angetriebenen Türschlosses bekannt, die einen Stellantrieb aufweist, der über ein Zahnrad ein bewegliches Element des Türschlosses antreibt. Dabei erfolgt die Bewegungsübertragung von dem Zahnrad über eine Rutschkupplung zu dem nachfolgenden Element des Antriebsweges, die eine in eine entsprechende Ausnehmung des Zahnrades eingesetzte Reibringscheibe aus einem elastomer-elastischen Material besitzt.

Der Erfindung liegt daher die Aufgabe zugrunde eine Antriebseinrichtung der obengenannten Art an zu geben, die einen besonders geringen Platzbedarf und ein besonders geringes Maß an Herstellungsaufwand erfordert, zusätzliche Elemente innerhalb der Antriebseinrichtung verzichtbar sind sowie bei der auch bei einem plötzlichen Ausschalten des Stellantriebs die Schwungenergie des Stellelements zuverlässig abfangbar ist.

Diese Aufgabe wird erfindungsgemäß dadurch gelöst, dass der Zahnkranz des Zahnrads und die Nabe des Zahnrads über das elastische Zwischenelement stoffschlüssig miteinander verbunden sind.

Die Erfindung geht dabei von der Überlegung aus, dass Schwungenergie eines Stellantriebs eine erhebliche Drehmomentspitze erzeugen kann, die abgefangen werden sollte, um mechanische Schäden der Antriebseinrichtung zuverlässig zu vermeiden. Ein Abfangen der Schwungenergie könnte durch ein Ausschwingen der jeweils bewegten Komponenten realisiert werden. Für ein Ausschwingen der bewegten Komponenten ist jedoch Raum im Gehäuse der Antriebseinrichtung erforderlich. Dieser Raum kann nicht bereitgestellt werden, da die Antriebseinrichtung zum Einbau in besonders schmale Elemente wie beispielsweise eine Kraftfahrzeugtür, vorgesehen ist. Ein Ausschwingen der bewegten Komponenten des Motors der Antriebseinrichtung sollte daher nicht über einen Schwungweg sondern mit Komponenten realisierbar sein, die ohnehin in der Antriebseinrichtung vorhanden sind. Werden nun der Stellantrieb und das bewegliche Element entkoppelt, so kann die überschüssige Schwungenergie mittels des Entkopplungselements abgefangen werden. Dabei sollte jedoch zuverlässig gewährleistet sein, dass das bewegliche Element weiterhin besonders zuverlässig ansteuerbar ist. Als Entkopplungsmedium bietet sich elastisches Material an, das zwischen dem Stellantrieb und dem beweglichen Element innerhalb der Antriebseinrichtung angeordnet ist. Dabei sollte jedoch ein zusätzliches Element innerhalb der Antriebseinrichtung verzichtbar sein. Hierzu sind der Zahnkranz des Zahnrads und die Nabe des Zahnrads über ein überwiegend elastisches Zwischenelement miteinander verbunden. Nach einem Abstellen des Stellantriebs schwingt das elastische Zwischenelement in seine Ausgangsposition zurück und fängt hierdurch Schwungenergie der Antriebseinrichtung ab, die nach dem Betrieb des Stellantriebs noch in der Antriebseinrichtung vorhanden ist.

Durch die stoffschlüssige Verbindung ist das elastische Zwischenelement Bestandteil des Zahnrads. Hierdurch weist die Antriebseinrichtung einen besonders geringen Bauraum auf. Weiterhin sind zusätzliche Befestigungsmittel verzichtbar, da der Zahnkranz und die Nabe des Zahnrads über das elastische Zwischenelement beispielsweise mittels 2-Komponenten-Technik verbunden sind. Hierzu eignen sich alle Hart-Weich-Kombinationen, welche sich stoffschlüssig miteinander verbinden lassen.

Vorteilhafterweise ist das überwiegend starre Material des Zahnkranzes des Zahnrads und der Nabe des Zahnrads überwiegend starrer Kunststoff, wobei das elastische Zwischenelement aus einem überwiegend elastischen Kunststoff besteht. Kunststoffe lassen sich beispielsweise chemisch in besonders einfacher Weise stoffschlüssig miteinander verbinden, wodurch der Herstellungsaufwand der Antriebseinrichtung ein besonders geringes Maß aufweist.

Vorteilhafterweise greift die Nabe des Zahnrads in einen Zahnkranz einer Steuerscheibe, wobei die Steuerscheibe wiederum unmittelbar oder mittelbar das bewegliche Element freigibt oder sperrt. Hierbei stellt das Zahnrad das Verbindungselement zwischen dem Stellantrieb und der Steuerscheibe dar. Mittels der Steuerscheibe kann besonderen Anforderungen an die Beaufschlagung des beweglichen Elements Rechnung getragen werden.

Die Nabe des Zahnrads weist vorteilhafterweise einen Anschlag auf, der in Abhängigkeit von der Stellung des Zahnrads das bewegliche Element freigibt oder sperrt. Die mit einem Anschlag versehene Nabe kann unmittelbar oder mittelbar ein bewegliches Element, insbesondere eine Schließeinrichtung einer Kraftfahrzeugtür beaufschlagen, wodurch mit einer besonders geringen Anzahl von Elementen in besonders effektiver Weise eine Antriebseinrichtung insbesondere für eine Schließvorrichtung einer Kraftfahrzeugtür realisiert ist.

Der Stellantrieb der Antriebseinrichtung ist vorteilhafterweise ein Elektromotor. Dabei kann es sich um einen handelsüblichen Elektromotor handeln, wodurch der Kostenaufwand der Antriebseinrichtung ein besonders geringes Maß aufweist.

Die mit der Erfindung erzielten Vorteile liegen insbesondere darin, daß die Antriebseinrichtung eine besonders geringe Bauhöhe aufweist, was sie insbesondere zum Antrieb für eine Schließeinrichtung einer Kraftfahrzeugtür auszeichnet. Dabei kann gleichzeitig ein besonders geringer Verschleiß der Antriebseinrichtung gewährleistet sein, sofern das elastische Zwischenelement aus dauerhaft belastbarem Material gefertigt ist.

Ein Ausführungsbeispiel der Erfindung wird anhand einer Zeichnung näher erläutert. Darin zeigen:
- Fig. 1: schematisch eine Antriebseinrichtung für eine Schließeinrichtung einer Kraftfahrzeugtür von der Seite,
- Fig. 2: schematisch eine Antriebseinrichtung für eine Schließeinrichtung einer Kraftfahrzeugtür von vorn,
- Fig. 3: schematisch eine Unteransicht der Antriebseinrichtung gemäß den Figuren 1 und 2.

Einander entsprechende Teile sind in allen Figuren mit denselben Bezugszeichen versehen.

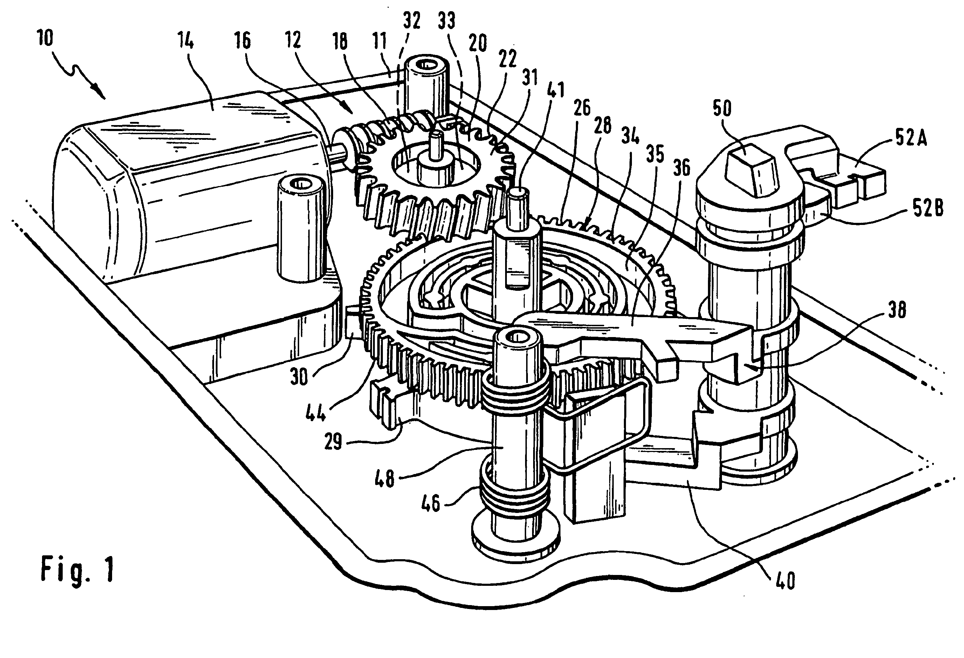

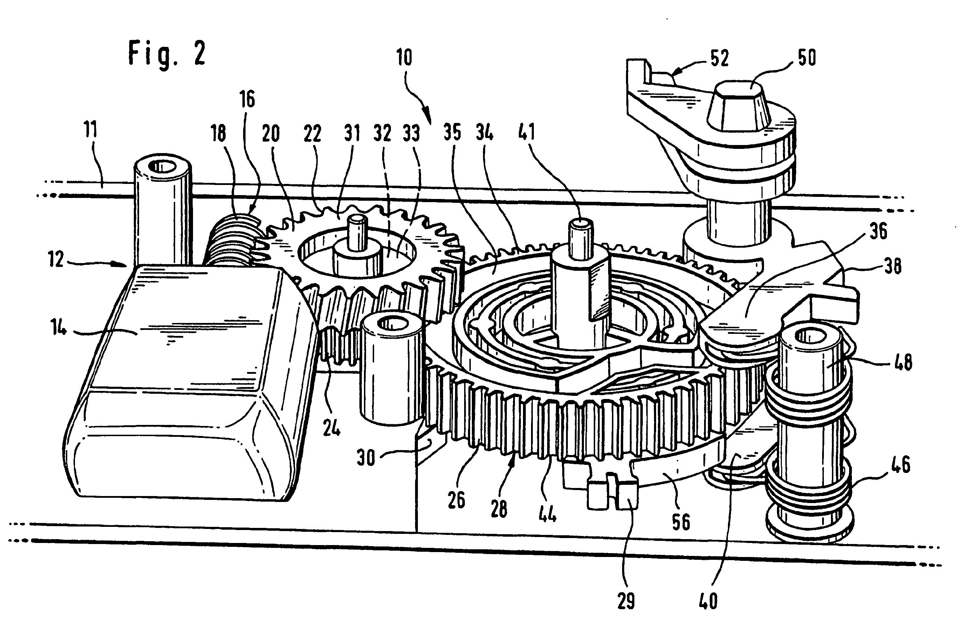

Die Antriebseinrichtung 10 gemäß den Figuren 1 und 2 ist für ein elektrisch betriebenes Schloß einer Tür eines Kraftfahrzeugs vorgesehen. Die Tür sowie das Kraftfahrzeug sind in der Zeichnung nicht näher dargestellt.

Die Antriebseinrichtung 10 ist in einem Gehäuse 11 angeordnet und umfasst einen Stellantrieb 12, der ein handelsüblicher Elektromotor ist. Der Stellantrieb 12 ist von außen bestrombar, was in der Zeichnung nicht näher dargestellt ist. Der Stellantrieb 12 weist ein Stellantriebgehäuse 14 auf, aus dem eine Welle 16 herausragt. Auf der Welle 16 ist eine Schnecke 18 angeordnet. Die Welle 16 und die Schnecke 18 gemäß der Zeichnung sind einstückig ausgeführt, sie können jedoch alternativ auch zweistückig ausgeführt sein. Die Schnecke 18 kämmt ein Zahnrad 20, das einen Zahnkranz 22 und eine Nabe 24 aufweist. Die Nabe 24 des Zahnrads 20 wiederum kämmt mit einem Zahnkranz 26 einer Steuerscheibe 28. Diese kämmende Verbindung erfolgt unterhalb des Zahnkranzes 20 und ist daher in den Figuren 1 und 2 nicht zu sehen. Die Steuerscheibe 28 weist einen Anschlag 29 auf, mittels dessen eine Start- und eine Ruheposition der Antriebseinrichtung 10 einstellbar ist. Darüberhinaus dient der Anschlag 29 dazu, eine Position maximaler Auslenkung der Antriebseinrichtung 10 mittels eines gehäusefesten Anschlags 30 festzulegen.

Der Zahnkranz 22 des Zahnrads 20 und die Nabe 24 des Zahnrads 20 bestehen aus überwiegend starrem Material 31, das in diesem Ausführungsbeispiel Kunststoff ist. Der Zahnkranz 22 des Zahnrads 20 und die Nabe 24 des Zahnrads 20 sind über ein elastisches Zwischenelement 32 miteinander verbunden. Das elastische Zwischenelement 32 besteht aus einem überwiegend elastischen Kunststoff 33. Der Zahnkranz 22 des Zahnrads 20 und die Nabe 24 des Zahnrads 20 sind durch eine sogenannte 2-Komponenten-Technik stoffschlüssig miteinander verbunden.

In eine auf der Oberseite 34 der Steuerscheibe 28 angeordnete Vertiefung 35 greift ein erster Arm 36 eines zweiarmigen Hebels 38 mittels eines Noppens, der annähernd parallel zur Drehachse 41 der Steuerscheibe 28 verlaufend an dem Endbereich des ersten Arms 36 des Hebels 38 angeordnet ist, was in der Zeichnung nicht näher dargestellt ist. Die Vertiefung 35 ist dabei als annähernd kreisförmiger Kanal ausgeführt, der zumindest an einer Stelle asymmetrisch zur Drehachse 41 der Steuerscheibe 28 verläuft. Ein zweiter Arm 40 des zweiarmigen Hebels 38 greift ebenfalls mit einem in der Zeichnung nicht näher dargestellten Noppen in die Unterseite 44 der Steuerscheibe 28. Die beiden Arme 36 und 40 des zweiarmigen Hebels 38 sind mittels einer Spiralfeder 46 gegen die Steuerscheibe 28 vorgespannt. Die Spiralfeder 46 ist an einem Vorsprung 48 des Gehäuses 11 angeordnet. Die Spiralfeder 46 ist einteilig ausgeführt, sie kann alternativ aber auch zweiteilig ausgeführt sein. Der zweiarmige Hebel 38 ist über eine Welle 50 mit einem ersten beweglichen Element 52A und einem zweiten beweglichen Element 52B verbunden, die als Schließelemente für eine Kraftfahrzeugtür ausgebildet ist.

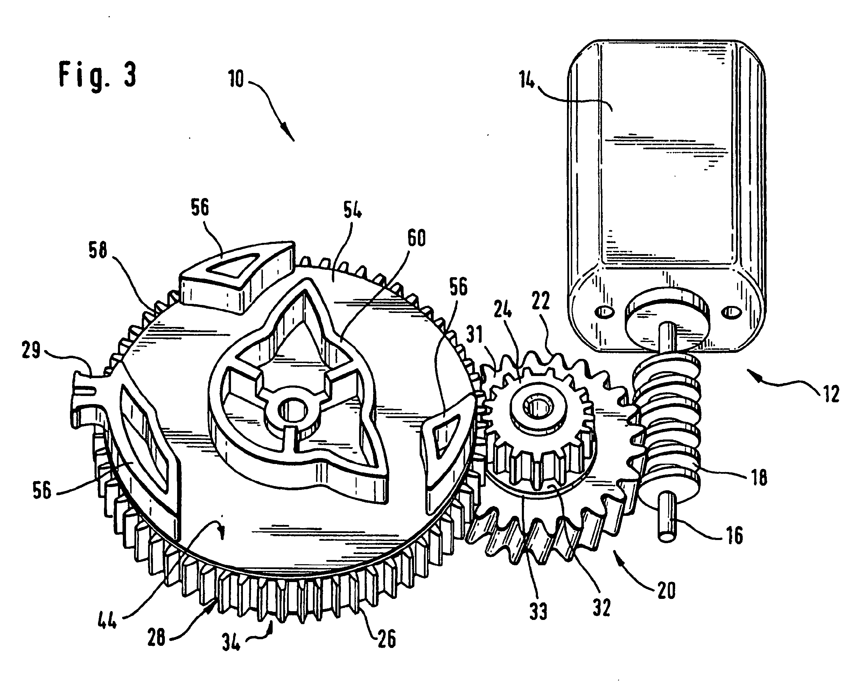

Den Stellantrieb 12, das Zahnrad 20 und die Steuerscheibe 28 zeigt Figur 3 von unten. Deutlich erkennbar ist, daß die Nabe 24 des Zahnrads 20 und der Zahnkranz 26 des Zahnrads 20 über das elastische Zwischenelement 32 miteinander verbunden sind. Auch zeigt Figur 3, wie die Nabe 24 des Zahnrads 20 den Zahnkranz 26 der Steuerscheibe 28 kämmt. Zu sehen ist auch der Anschlag 29, mittels dessen eine bestimmte Position der Antriebseinrichtung 10 über den gehäusefesten Anschlag 30 festlegbar ist. Weiterhin ist Figur 3 eine für einen Noppen des Arms 40 des zweiarmigen Hebels 38 vorgesehene Vertiefung 54 zu entnehmen, die für eine 360 Grad Drehbewegung des Noppens ausgelegt ist. Die Vertiefung 54 ist dabei durch drei Ansätze 56 am Rand 58 der Steuerscheibe 28 und durch eine asymmetrisch zur Drehachse 41 der Steuerscheibe 28 verlaufende Erhebung 60 begrenzt. Alternativ können auch mehr oder weniger als drei Ansätze vorgesehen sein. Weiterhin kann auch die Vertiefung 54 annähernd kanalförmig ausgeführt sein.

Beim Betrieb der Antriebseinrichtung 10 wird der als Elektromotor ausgebildete Stellantrieb 12 in nicht näher dargestellter Weise mit Strom versorgt. Im bestromten Zustand dreht sich die Welle 16 des Stellantriebs 12. Die Drehbewegung der Welle 16 überträgt sich über die Schnekke 18 und den Zahnkranz 22 des Zahnrads 20 auf die Nabe 24 des Zahnrads 20. Von der Nabe 24 wiederum überträgt sich die Drehbewegung des Stellantriebs 12 über den Zahnkranz 26 der Steuerscheibe 28 auf die Steuerscheibe 28. Die Drehbewegung der Steuerscheibe 28 wiederum bewegt die beiden Arme 36 und 40 des zweiarmigen Hebels 38 in Abhängigkeit von der Position des jeweiligen Arms 36 oder 40 in der jeweiligen Vertiefung 35 bzw. 54.

Befindet sich der Arm 36 in dem Bereich der Vertiefung 35, die annähernd symmetrisch zur Drehachse 41 der Steuerscheibe 28 verläuft, so bewegt sich weder der Arm 36 noch die beweglichen Elemente 52A und 52B. Befindet sich jedoch der Arm 36 in dem Bereich der Vertiefung 35, die asymmetrisch zur Drehachse 41 der Steuerscheibe 28 verläuft, so wird der Arm 36 des zweiarmigen Hebels 38 zunächst in Richtung der Drehachse 41 und dann weg von der Drehachse 41 ausgelenkt. Diese Auslenkung des Arms 36 des zweiarmigen Hebels 38 führt über die Welle 50 eine Auf- und Ab oder Hin- und Herbewegung der beweglichen Elemente 52A und 52B herbei. Analog erfolgt auch über den zweiten Arm 40 des zweiarmigen Hebels 38 eine Bewegung der beweglichen Elemente 52A und 52B. Dabei können die beiden Arme 36 und 40 des zweiarmigen Hebels 38 die beweglichen Elemente 52A und 52B in beliebigen Kombinationen wie beispielsweise gleichzeitig, nacheinander oder einzeln ansteuern.

Damit der Stellantrieb 12 in besonders kurzer Zeit hochlaufen und die beweglichen Elemente 52A und 52B antreiben kann, ist der Stellantrieb 12 besonders leistungsstark ausgelegt. Dabei kann der Stellantrieb 12 die beweglichen Elemente 52A und 52B so verstellen, daß die Steuerscheibe 12 mit ihrem Anschlag 29 in Anlage an den Anschlag 30 gelangt. Es kann also der Fall eintreten, daß die Steuerscheibe 28 mit ihrem Anschlag 29 an dem gehäusefesten Anschlag 30 anliegt und der Stellantrieb 12 weiterhin bestromt ist. Die aufgrund der Leistungsstärke des Stellantriebs 12 noch in der Antriebseinrichtung 10 vorhandene Schwungenergie wird sowohl beim Erreichen des Anschlags 30 durch den Anschlag 29 der Steuerscheibe 28 als auch beim Abstellen des Stellantriebs 12 von dem elastischen Zwischenelement 32 abgefangen, was im folgenden näher beschrieben ist.

Bei einer Bestromung des Stellantriebs 12 wird die Drehbewegung der Welle 16 über die Schnecke 18 auf den Zahnkranz 22 des Zahnrads 20 übertragen. Die Nabe 24 des Zahnrads 20 folgt der Drehbewegung des Zahnkranzes 22 des Zahnrads 20, da das elastische Zwischenelement 32 ausreichend steif ausgelegt ist. Die Nabe 24 des Zahnrads 20 kämmt den Zahnkranz 26 der Steuerscheibe 28.

Nach einer Bestromung des Stellantriebs 12 und Erreichen des Anschlags 30 durch den Anschlag 29 der Steuerscheibe 28 bewegt sich die Steuerscheibe 28 kaum noch, da ihr Anschlag 29 an dem gehäusefesten Anschlag 30 anliegt. Der Stellantrieb 12 läuft jedoch weiter und treibt die Welle 16, die auf der Welle 16 des Stellantriebs 12 angeordnete Schnecke 18 und den Zahnkranz 22 des Zahnrads 20 noch in die von dem Stellantrieb 12 vorgegebene Richtung weiter an aufgrund dessen, daß der Stellantrieb 12 weiterläuft. Diese Bewegung der Welle 16 des Stellantriebs 12 nach Erreichen des Anschlags 30 durch den Anschlag 29 der Steuerscheibe 28 überträgt sich über die Welle 16 und die Schnecke 18 auf den Zahnkranz 22 des Zahnrads 20. Aufgrund der elastischen Eigenschaften des elastischen Zwischenelements 32 verdreht sich nun das elastische Zwischenelement 32 ohne dabei die Nabe 24 des Zahnkranzes 20 mitzudrehen. Es wird also ein erster virtueller Fixpunkt auf dem Zahnkranz 22 des Zahnrads 20 relativ zu einem zweiten virtuellen Fixpunkt auf der Nabe 24 des Zahnrads 20 verschoben. Das Maß der Verschiebung hängt dabei von der Elastizität des elastischen Zwischenelements 32 ab. Entlang der Drehrichtung folgt also der zweite virtuelle Fixpunkt auf der Nabe 24 des Zahnrads 20 dem ersten virtuellen Fixpunkt auf dem Zahnkranz 22 des Zahnrads 20. Der Stellantrieb 12 ist dabei so dimensioniert, daß bei einer maximalen Auslenkung des elastischen Zwischenelements 32 der Stellantrieb 12 keine weitere Drehbewegung des Zahnrads 20 bewirken kann. Die Verdrehung des elastischen Zwischenelements 32 fängt also zuverlässig überschüssige Schwungenergie des Stellantriebs 12 ab.

Alternativ kann der Stellantrieb 12 bei einem Erreichen des Anschlags 30 durch den Anschlag 29 der Steuerscheibe 28 über eine nicht näher dargestellte Steuereinrichtung abgestellt werden. Dann kommt die Welle 16 erst nach einem Abschalten des Stellantriebs 12 zur Ruhe. Steht die Welle 16, so schwingt das elastische Zwischenelement 32 zunächst in die bisherige Richtung weiter. Bis zum Stillstand der Welle 16 sind die beiden virtuellen Fixpunkte auf dem Zahnkranz 22 des Zahnrads 20 und auf der Nabe 24 des Zahnrads 20 einander annähernd gegenüber angeordnet. Steht die Welle 16 dann überholt quasi der auf dem Zahnkranz 22 des Zahnrads 20 angeordnete erste virtuelle Fixpunkt den auf der Nabe 24 des Zahnrads 20 angeordneten zweiten virtuellen Fixpunkt. Das Maß der Auslenkung des ersten virtuellen Fixpunkts gegenüber dem zweiten virtuellen Fixpunkt hängt dabei von den elastischen Eigenschaften des elastischen Zwischenelements 32 ab.

Nach dem Erreichen eines Punkts maximaler Auslenkung, der durch die elastischen Eigenschaften des elastischen Zwischenelements 32 festgelegt ist, schwingt dann das elastische Zwischenelement 32 in umgekehrter Richtung zurück und dreht wiederum seine Schwungrichtung, sobald es einen weiteren Punkt maximaler Auslenkung erreicht hat. Dieses Hin- und Herschwingen des elastischen Zwischenelements 32 erfolgt gedämpft, da dem elastischen Zwischenelement 32 keine weitere Energie zugeführt wird. Das elastische Zwischenelement 32 schwingt solange, bis es seine Ruheposition erreicht hat. Das elastische Zwischenelement 32 bewirkt also, daß das Steuerrad 28 bei einem Abstellen des Stellantriebs 12 langsam ausschwingt. Hierdurch wird die Drehbewegung der Steuerscheibe 28 langsam in gedämpfter Weise abgebremst. Ohne eine Abbremsung der Steuerscheibe 28 könnte aufgrund der Schwungenergie des Stellantriebs ein Ausschwingen der Steuerscheibe 28 erfolgen, das in ungedämpfter Weise Zähne der Steuerscheibe 28, der Nabe 24 des Zahnrads 20 und des Zahnkranzes 22 des Zahnrads 20 zerstören könnte.

Ein vergleichbarer Ausschwingvorgang des elastischen Zwischenelements 32 erfolgt, wenn der Stellantrieb 12 abgestellt wird, ohne daß der Anschlag 30 der Steuerscheibe 28 in Anlage an den Anschlag 30 gelangt.

Durch das elastische Zwischenelement 32, das die Nabe 24 des Zahnrads 20 mit dem Zahnkranz 22 des Zahnrads 20 verbindet, ist sichergestellt, das bei einem Abstellen des Stellantriebs 12 die überschüssige Schwungenergie des Stellantriebs 12 und die damit verbundene Drehmomentspitze von der Antriebseinrichtung aufgefangen wird, ohne daß dabei Komponenten der Antriebseinrichtung beschädigt oder im Extremfall sogar zerstört werden. Gleichzeitig weist dabei die Antriebseinrichtung 10 einen besonders geringen Platzbedarf auf, was sie zum Antrieb einer Schließeinrichtung für eine Tür eines Kraftfahrzeugs besonders auszeichnet.

## Patentansprüche

1. Antriebseinrichtung (10) mit einem Stellantrieb (12) zum Antreiben eines beweglichen Elements (32), insbesondere einer Schließeinrichtung einer Kraftfahrzeugtür, mittels eines Zahnrads (20), das einen Zahnkranz (22) und eine Nabe (24) aufweist, wobei der Zahnkranz (22) des Zahnrads (20) mittelbar oder unmittelbar von dem Stellantrieb (12) antreibbar ist und das bewegliche Element (32) mittelbar oder unmittelbar von der Nabe (24) des Zahnrades (20) beaufschlagbar ist und wobei der Zahnkranz (22) des Zahnrads (20) und die Nabe (24) des Zahnrads (20) aus überwiegend starrem Material (31) bestehen und über ein überwiegend elastisches Zwischenelement (32) miteinander verbunden sind, **dadurch gekennzeichnet, dass** der Zahnkranz (22) des Zahnrads (20) und die Nabe (24) des Zahnrads (20) über das elastische Zwischenelement (32) stoffschlüssig miteinander verbunden sind.

2. Antriebseinrichtung nach Anspruch 1, **dadurch gekennzeichnet, dass** das überwiegend starre Material (32) des Zahnkranzes (22) des Zahnrads (20) und der Nabe (24) des Zahnrads (20) überwiegend starrer Kunststoff ist und das elastische Zwischenelement (32) aus einem überwiegend elastischen Kunststoff (33) besteht.

3. Antriebseinrichtung nach einem der vorhergehenden Ansprüche, **dadurch gekennzeichnet, dass** die Nabe (24) des Zahnrads (20) in einen Zahnkranz (26) einer Steuerscheibe (28) greift, wobei die Steuerscheibe (28) wiederum mittelbar oder unmittelbar das bewegliche Element (32) freigibt oder sperrt.

4. Antriebseinrichtung nach einem der vorhergehenden Ansprüche, **dadurch gekennzeichnet, dass** der Stellantrieb (12) ein Elektromotor ist.

## Claims

1. Drive device (10) with an actuating drive (12) for driving a movable element (32), in particular a locking device of a motor vehicle door, by means of a gear wheel (20) which has a gear ring (22) and a hub (24), it being possible for the gear ring (22) of the gear wheel (20) to be driven directly or indirectly by the actuating drive (12) and for the movable element (32) to be acted on directly or indirectly by the hub (24) of the gear wheel (20) and the gear ring (22) of the gear wheel (20) and the hub (24) of the gear wheel (20) being composed of predominantly rigid material (31) and being joined to one another by a predominantly elastic intermediate element (32), **characterized in that** the gear ring (22) of the gear wheel (20) and the hub (24) of the gear wheel (20) are joined to one another with a material-to-material bond by the elastic intermediate element (32).

2. Drive device according to Claim 1, **characterized in that** the predominantly rigid material (32) of the gear ring (22) of the gear wheel (20) and of the hub (24) of the gear wheel (20) is predominantly rigid plastic and the elastic intermediate element (32) is composed of a predominantly elastic plastic (33).

3. Drive device according to either of the preceding claims, **characterized in that** the hub (24) of the gear wheel (20) engages in a gear ring (26) of a control disc (28), the control disc (28) in turn releasing or locking the movable element (32) directly or indirectly.

4. Drive device according to one of the preceding claims, **characterized in that** the actuating drive (12) is an electric motor.

## Revendications

1. Système d'entraînement (10) comportant un mécanisme de commande (12) destiné à commander un élément mobile (32), notamment un système de verrouillage d'une porte de véhicule automobile, au moyen d'une roue dentée (20) comportant une couronne dentée (22) et un moyeu (24), où la couronne dentée (22) de la roue dentée (20) peut être entraînée indirectement ou directement par le mécanisme de commande (12) et où l'élément mobile (32) peut être soumis indirectement ou directement à l'action du moyeu (24) de la roue dentée (20) et où la couronne dentée (22) de la roue dentée (20) et le moyeu (24) de la roue dentée (20) se composent d'une matière (31) principalement rigide et sont liées l'une à l'autre par l'intermédiaire d'un élément intermédiaire (32) principalement élastique **caractérisé par le fait que** la couronne dentée (22) de la roue dentée (20) et le moyeu (24) de la roue dentée (20) sont liées l'une à l'autre, par l'intermédiaire de l'élément élastique intermédiaire (32), par assemblage par association de matière.

2. Système d'entraînement selon la revendication 1 **caractérisé par le fait que** la matière (31) principalement rigide de la couronne dentée (22) de la roue dentée (20) et du moyeu (24) de la roue dentée (20) est une matière plastique principalement rigide et que l'élément élastique intermédiaire (32) se compose d'une matière plastique (33) principalement élastique.

3. Système d'entraînement selon l'une des revendications précédentes **caractérisé par le fait que** le moyeu (24) de la roue dentée (20) s'engrène dans une couronne dentée (26) d'un disque de commande (28), le disque de commande (28) libérant ou bloquant, de son côté, indirectement ou directement l'élément mobile (32).

4. Système d'entraînement selon l'une des revendications précédentes **caractérisé par le fait que** le mécanisme de commande (12) est un moteur électrique.
